# EUROPEAN PATENT SPECIFICATION

(11) **EP 2 431 118 B1**
(45) Date of publication and mention of the grant of the patent: **15.08.2018**
(21) Application number: 10774882.4
(22) Date of filing: 10.05.2010
(51) Int. Cl.: B23D 61/12

(54) **BAND SAW BLADE**
BANDSÄGEBLATT
LAME DE SCIE À RUBAN

(30) Priority: 12.05.2009 JP 2009115473
(43) Date of publication of application: 21.03.2012
(73) Proprietor: AMADA Company, Ltd., Isehara-shi Kanagawa 259-1116 (JP); Amada Machine Tools Co., Ltd, Isehara-shi, Kanagawa 259-1196 (JP)
(72) Inventor: NAGANO, Yuji, Isehara-shi Kanagawa 259-1196 (JP)
(74) Representative: Grünecker Patent- und Rechtsanwälte PartG mbB
(86) International application number: PCT/JP2010/057881
(87) International publication number: WO 2010/131625

(56) References cited:
- EP-A2- 2 060 356
- BE-A- 458 488
- JP-A- 1 153 216
- JP-A- 8 039 504
- JP-A- 11 267 920
- JP-A- H01 153 216
- JP-A- 2000 033 518
- JP-A- 2004 188 539
- US-A- 5 425 296
- US-B1- 6 314 854

## Description

### TECHNICAL FIELD

The present invention relates to a band saw blade according to the preamble of claim 1.

### BACKGROUND ART

Such a saw blade is known from document US6314854B1.

Band saw machines have heretofore been used as devices for cutting large workpieces made of metal, for example. In terms of the material, so-called bi-metal band saw blades are frequently used as materials for band saw blades employed in the band saw machines. The bi-metal band saw blade uses high-speed tool steel or cemented carbide for the tooth points and uses heavy-duty alloy steel for the body portion.

The bi-metal band saw blade, however, has the following problem due to such high hardness of the tooth points. Specifically, when there is a problem in machinability of a material, a mistake in selection of cutting conditions or an insufficient application of a wire brush for removing chips to the band saw blade, for example, the bi-metal band saw blade may fail to perform normal cutting because of occurrence of chipping at the tooth points during cutting.

Various methods have been put into practice as the method of preventing occurrence of such chipping, including, a method of increasing a tooth angle at each tooth point, a method of chamfering a corner portion of each tooth so as to increase an angle of the corner portion as disclosed in Patent Document 1 (Japanese Patent Application Laid-Open No. Hei 6-155158), a method of chamfering a saw blade including dovetail-shaped set teeth which are set to both right and left, such that an angle of an outer corner portion of each of the teeth at the widest positions can have an angle of 90° or larger as disclosed in Patent Document 2 (Japanese Patent Application Laid-Open No. Hei 6-39631), and a method of subjecting a tooth point to fine chamfering as disclosed in Patent Document 3 (Japanese Patent Application Laid-Open No. 2000-263327).

As for the problem of occurrence of chipping in cutting a work with use of a brand-new band saw, chipping may occur if the brand-new band saw blade, as it is, is used under general cutting conditions. For this reason, trial cutting is generally carried out. That is, no matter how precisely the band saw blade is finished, the band saw blade always has some errors. Accordingly, if the band saw blade in a brand new state is used to perform a cutting operation is performed under the general cutting conditions, problems such as vibration, blade chipping off, and uneven wearing are apt to occur. Therefore, the work is cut with the brand-new band saw blade by applying even a light load in order to make the saw teeth on the band saw blade uniform.

### PRIOR ART DOCUMENTS

### Patent Documents

Patent Document 1: Japanese Patent Application Laid-Open No. Hei 6-155158
Patent Document 2: Japanese Patent Application Laid-Open No. Hei 6-39631
Patent Document 3: Japanese Patent Application Laid-Open No. 2000-263327

### DISCLOSURE OF THE INVENTION

### Technical Problem

Patent Document 1 discloses a saw blade having a configuration as shown in Fig. 1. Specifically, a saw blade 101 includes straight teeth 101S and left and right set teeth 101L and 101R. Moreover, an inclined rounded-off portion (a chamfer) is formed in a corner portion with an angle of 90° (right angle) on each of the straight teeth 101S and the left and right set teeth 101L and 101R, so that the corner portions of the straight teeth 101S and the left and right set teeth 101L and 101R are formed to have an angle of 90° or larger. Therefore, each corner portion has improved strength as compared with the case of the corner portion with the angle of 90°, and an effect to prevent chipping is thereby improved.

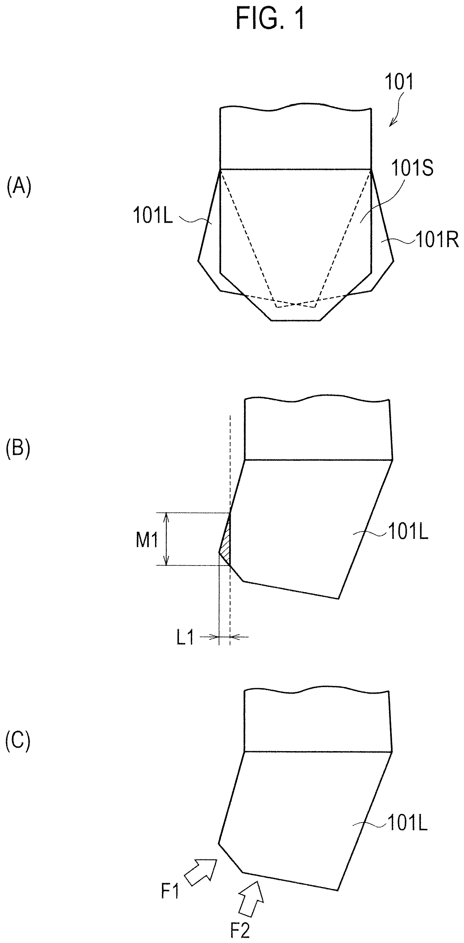

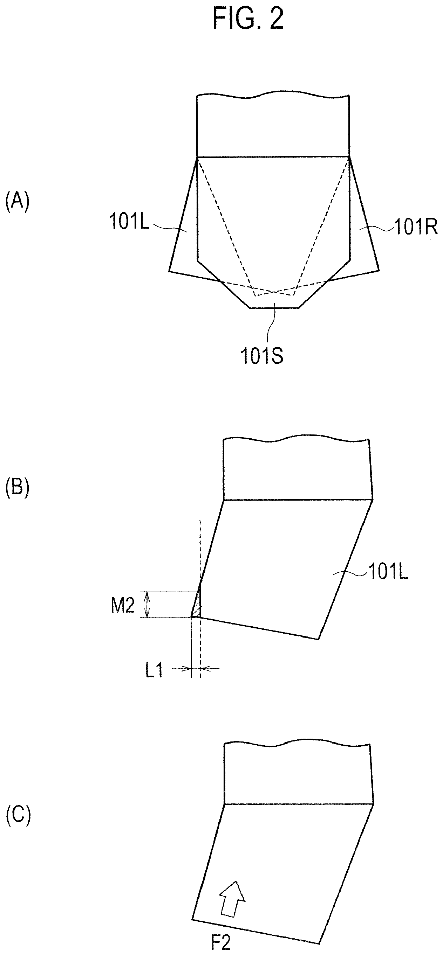

However, in this configuration, when abrasion L1 occurs in a lateral surface direction at the outer corner portion of the left set tooth 101L, for example, abrasion M1 in a vertical direction will be caused as shown in Fig. 1(B). Here, as compared to the case of a saw blade not provided with any round-off portions (chamfers) on the left and right set teeth 101L and 101R as shown in Fig. 2, the abrasion amount M1 is greater than an abrasion amount M2 in the vertical direction in the case of the abrasion amount L1 in the lateral direction. Therefore, this saw blade has problems that cutting resistance increases more easily, and a lateral component force easily becomes greater than the saw blade not provided with the round-ff portions on the left and right set teeth 101L and 101R, and that the straight line stability of the saw blade is deteriorated as a consequence.

Moreover, the above-described configuration meets cutting resistance in two different directions as indicated with arrows F1 and F2 in Fig. 1(C). Incidentally, the saw blade shown in Fig. 2 meets the resistance only in one direction as shown in Fig. 2(C). In connection with this, in the process of manufacturing the saw blade, it is difficult to perform a uniform chamfering operation of all tooth points of the saw teeth and variations in chamfering accuracy are apt to occur within a tolerance. Accordingly, there is another problem that the saw teeth individually meet cutting resistance, which varies by tooth, in two directions and the straight line stability thereof is further deteriorated easily.

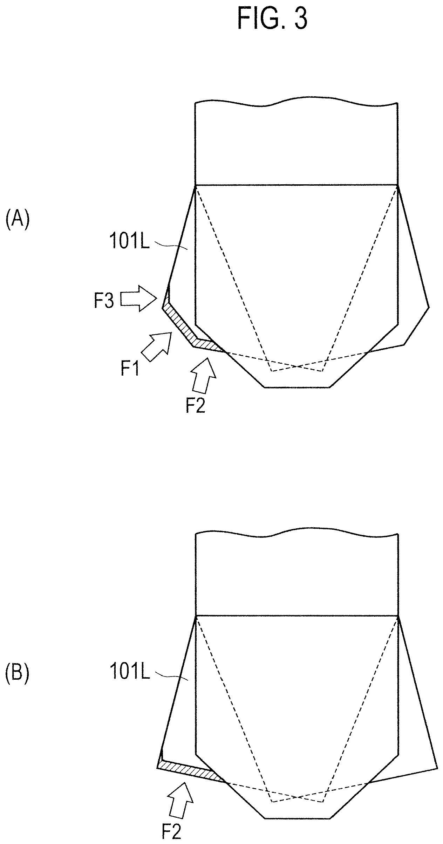

For reference, hatched portions in Figs. 3(A) and 3(B) show states in which the left set teeth 101L of both of the saw blade having the configuration shown in Fig. 1 and the saw blade shown in Fig. 2 are equally worn away. Specifically, the saw blade having the configuration disclosed in Patent Document 1 provides an improved effect to suppress occurrence of chipping indeed, but has a problem that large cutting resistance in the lateral direction (see Fig. 1(B) and Fig. 3(A)) is apt to make the straight line stability more problematic as the abrasion progresses.

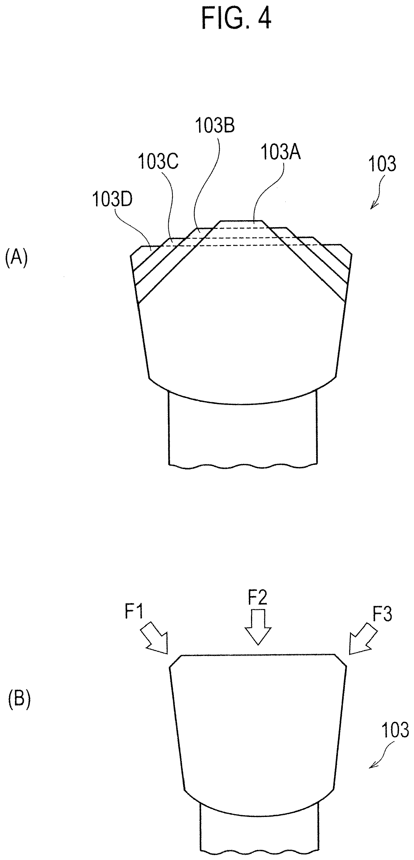

Patent Document 2 discloses a saw blade having a configuration as shown in Fig. 4. Specifically, a saw blade 103 includes multiple dovetail-shaped saw teeth 103A to 103D formed such that a width dimension at each tip portion becomes greater as a height dimension thereof becomes smaller. In the configuration of this saw blade 103, each corner portion of each saw tooth has an angle of 90° or larger. Accordingly, the effect to prevent occurrence of chipping is improved as similar to the saw blade disclosed in Patent Document 1. However, since the saw blade 103 is the dovetail-shaped saw blade, the saw blade meets cutting resistance in three different directions as shown in Fig. 4(B). Moreover, due to the manufacturing errors within the tolerance as described above, the cutting resistance that the saw teeth of the saw blade 103 receive in the three directions varies among the saw teeth. Hence there is a problem that the straight line stability is easily deteriorated as similar to the saw blade disclosed in Patent Document 1.

Patent Document 3 discloses a saw tooth having a configuration as shown in Fig. 5. The saw tooth 105 is configured such that a chamfered portion 105C is formed in an intersecting point of a rake surface 105A with a clearance surface 105B so as to make an intersection angle between the rake surface 105A and the clearance surface 105B equal to or greater than 90°, and that fine semicircular chamfers of an arc shape are formed respectively in an intersecting point of the rake surface 105A with the chamfered portion 105C and on an intersecting point of the clearance surface 105B with the chamfered portion 105C. With this configuration, occurrence of chipping is dramatically reduced. However, there is a problem that it is necessary to carry out precision machining for forming the chamfered portion 105C, and a special processing machine is therefore required.

This invention has been made to solve the aforementioned problems. Accordingly, an object thereof is to provide a band saw blade which can suppress occurrence of chipping while achieving improvement in strength of corner portions of saw teeth on the band saw blade.

Another object of the present invention is to provide a band saw blade capable of preventing each saw tooth from being partially worn away to a large extent, and thus achieving improved straight line stability by suppressing cutting deviation.

### Technical Solution

In order to achieve the aforementioned objects, a first aspect of the present invention provides a band saw blade having the features of claim 1.

A second aspect of the present invention provides the band saw blade according to the first aspect, wherein the ridge lines of the left and right set teeth and of the straight tooth are continuous with one another when viewed from the running direction of the band saw blade.

A third aspect of the present invention provides the band saw blade according to one of the first and second aspects, wherein a height difference between the ridge lines of the saw teeth is in a range of 0.02 mm to 0.1 mm.

A fourth aspect of the present invention provides the band saw blade according to any one of the first to third aspects, wherein a height difference between an inner corner portion of each of the left and right set teeth and the central portion in the thickness direction of the ridge line of the straight tooth is in a range of 0.00 mm to 0.03 mm.

### Advantageous Effects

According to the band saw blade of any of the first aspect to the fourth aspect of the present invention, it is possible to suppress occurrence of chipping while achieving improvement in strength of a corner portion of each saw tooth on the band saw blade. Moreover, each saw tooth is evenly worn away according to the band saw blade of any of the first aspect to the fourth aspect of the present invention. In other words, it is possible to avoid substantial abrasion of part of each saw tooth, to suppress cutting deviation, and thereby to improve the straight line stability.

### BRIEF DESCRIPTION OF THE DRAWINGS

[Fig. 1] Figs. 1(A), 1(B), and 1(C) are explanatory views showing shapes of saw teeth according to the related art.
[Fig. 2] Figs. 2(A), 2(B), and 2(C) are explanatory views of conventional saw teeth shown for comparison.
[Fig. 3] Figs. 3(A) and 3(B) are explanatory views showing states of abrasion of the saw teeth.
[Fig. 4] Figs. 4(A) and 4(B) are explanatory views showing shapes of saw teeth according to the related art.

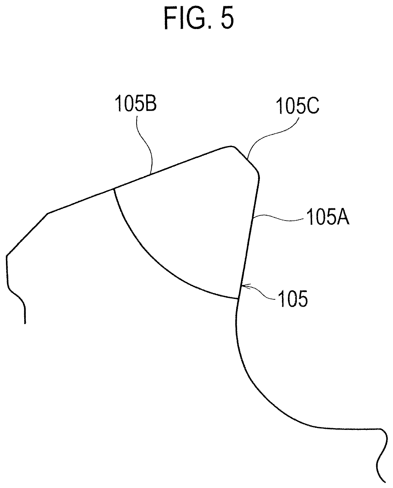

[Fig. 5] Fig. 5 is an explanatory view showing a shape of a saw tooth according to the related art.
[Fig. 6] Figs. 6(A), 6(B), and 6(C) are explanatory views showing a configuration of a band saw blade according to a first embodiment of the present invention.
[Fig. 7] Figs. 7(A) and 7(B) are explanatory views exaggeratingly showing a shape of a tip portion of a saw tooth on the band saw blade according to the first embodiment of the present invention.
[Fig. 8] Fig. 8 is an explanatory view showing a relationship among a straight tooth and left and right set teeth on the band saw blade.
[Fig. 9] Figs. 9(A) and 9(B) are explanatory views showing another relationship among the straight tooth and the left and right set teeth on the band saw blade.
[Fig. 10] Fig. 10 is an explanatory view showing yet another relationship among the straight tooth and the left and right set teeth on the band saw blade.
[Fig. 11] Fig. 11 is a table showing experimental results.
[Fig. 12] Figs. 12(A) and 12(B) are photographs showing states of abrasion at tips of saw teeth.
[Fig. 13] Fig. 13 is a graph showing transition of cutting deviation.

### BEST MODES FOR CARRYING OUT THE INVENTION

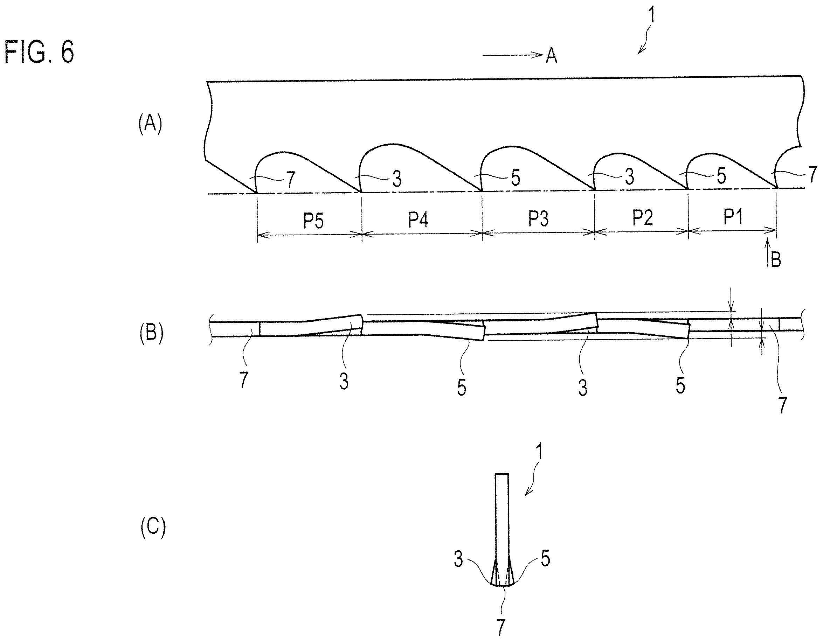

Embodiments of the present invention will be described below with reference to the accompanying drawings. Referring to Fig. 6, a band saw blade 1 according to a first embodiment of the present invention has a similar structure to a common usual band saw blade which includes a body member made of heavy-duty alloy steel and tooth points made of high-speed tool steel or cemented carbide. The band saw blade 1 includes: left and right set teeth 3 and 5 which are set by equal dimensions in left and right directions with respect to a running direction (a direction of an arrow A) of the band saw blade 1; and straight teeth 7 which are not set in the left and right directions. Pitches P1 to P5 among the straight teeth 7 and the left and right set teeth 3 and 5 may be formed into the same pitch or into mutually different pitches. Moreover, the numbers of the straight teeth 7 and the left and right set teeth 3 and 5 in one group may be set to arbitrary numbers. Note that tooth height dimensions (height dimensions from a predetermined reference position to tooth tips of the straight teeth 7 and the left and right set teeth 3 and 5) are set equal to one another.

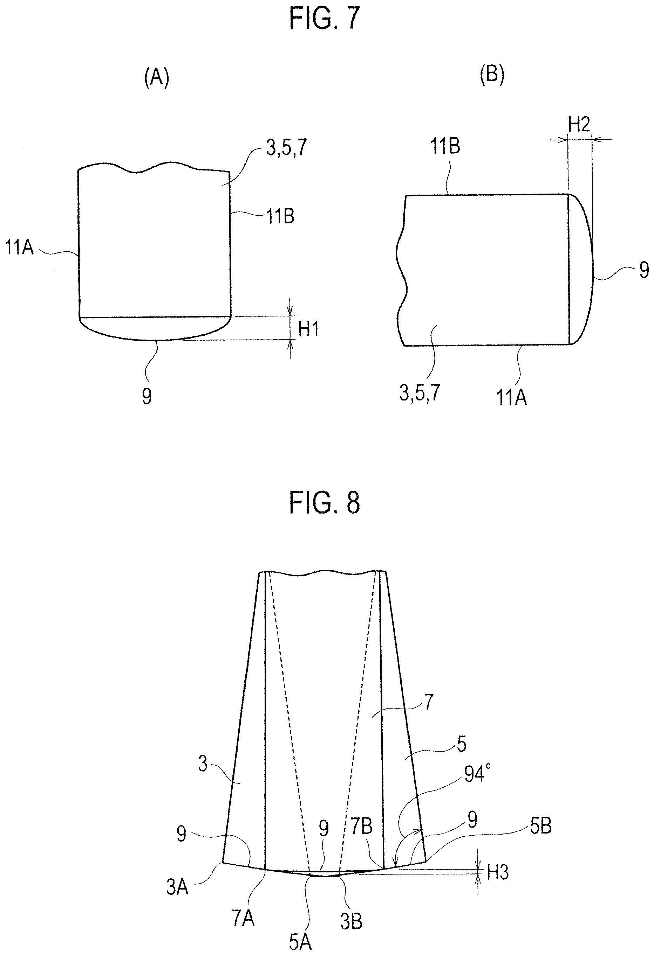

A ridge line 9 at the tip of each saw tooth among the straight teeth 7 and the left and right set teeth 3 and 5 on the band saw blade 1 is formed into a convex curved surface such that each of the saw teeth 3, 5, and 7 protrudes most at a central portion in a thickness direction thereof. Specifically, as exaggeratingly shown in Fig. 7(A), when each of the saw blades 3, 5, and 7 is viewed from the running direction of the band saw blade 1 (from a direction opposite to the arrow A in Fig. 6, i.e., from the right side in Fig. 6(A)), the ridge line 9 of each of the saw teeth 3, 5, and 7 is formed into the convex curved surface so as to protrude most at the central portion in the thickness direction (the left to right direction in Fig. 7(A)) of each of the saw teeth 3, 5, and 7. In other words, both sides in the thickness direction of the ridge line 9 of each of the saw teeth 3, 5, and 7 are formed into convex surfaces, whereby the ridge line 9 exhibits the convex curved surface on the whole even if the most protruding central portion includes a straight portion.

Moreover, as exaggeratingly shown in Fig. 7(B), the ridge line 9 of each of the saw teeth 3, 5, and 7 is formed into the convex curved shape so as to protrude most at the central portion in the thickness direction of each of the saw teeth 3, 5, and 7 when viewed from a direction of an arrow B in Fig. 6(A) as well, i.e., from a tooth tip side of each of the saw teeth 3, 5, and 7 on the band saw blade 1.

Therefore, an angle at an intersecting portion of any of the side surfaces 11A and 11B with the ridge line 9 on each of the saw teeth 3, 5, and 7 (hereinafter referred to as an angled portion or a corner portion), or namely, an angle between a tangent to the ridge line 9 and any of the side surfaces 1-1A and 11B at the intersecting portion (the corner portion) (hereinafter referred to as an angle of the angled portion or the corner portion) is greater than 90°. Here, the angles of the corner portions of the respective saw teeth 3, 5, and 7 are measured by use of photographs obtained by shooting enlarged views of the corner portions of the respective saw teeth 3, 5, and 7. Here, an outcome is subject to change depending on the thickness of the band saw blade 1 and on angles of a rake surface and a clearance surface thereof. However, when the angle of the corner portion is set to 94° which is greater than 90°, a difference in height in a band width direction of the ridge line 9 (a difference in height when viewed from the running direction of the band saw blade 1) H1 between the most protruding portion of the ridge line 9 and the corner portion as shown in Fig. 7(A) as well as a difference in height in a band length direction of the ridge line 9 (a difference in height when viewed from the direction of the tooth tip of the saw tooth 3, 5 or 7 on the band saw blade 1) H2 as shown in Fig. 7(B) are equal to 0.02 mm (HI (H2)= 0.02 mm). Meanwhile, when the angle of the corner portion is set to 100.0°, H1 and H2 are equal to 0.06 mm.

As understood from this configuration, if the ridge line 9 of each of the saw teeth 3, 5, and 7 is formed into the curved line so as to protrude most at the central portion in the thickness direction thereof, the angle of the corner portion of each of the saw teeth 3, 5, and 7 becomes equal to or greater than 90°. Therefore, strength (rigidity) of the corner portion of each of the saw teeth 3, 5, and 7 is improved more than the case of setting the angle of the corner portion equal to 90°, and it is possible to suppress occurrence of chipping. Moreover, the corner portion is set to the angle equal to or greater than 90° by forming the ridge line 9 of each of the saw teeth 3, 5, and 7 into the above-described curved line. In other words, the corner portion of each of the saw teeth 3, 5, and 7 is set to the angle equal to or greater than 90° without chamfering each of the saw teeth as disclosed in Patent Documents 1 and 2 described previously. Accordingly, it is possible to increase the angle of the corner portion without drastically changing the shape of the corner portion on each of the saw teeth 3, 5, and 7.

Therefore, when the corner portions on the respective saw teeth 3, 5, and 7 are worn away, it is possible to prevent an abrasion amount in a vertical direction from being extremely larger than an abrasion amount in a lateral direction as compared to the case of chamfering the corner portions as disclosed respectively in Patent Documents 1 and 2 described above, and thereby to achieve improvement in the straight line stability while suppressing an increase in cutting resistance and an increase in a component force in the lateral direction.

Regarding a relationship among the straight tooth 7 and the left and right saw teeth 3 and 5 on the band saw blade 1, left and right corner portions 7A and 7B of the straight tooth 7 have the same height in the band width direction as shown in Fig. 8 which depicts an enlarged substantial part of Fig. 6(C). On the other hand, left and right corner portions 3A and 3B as well as 5A and 5B of the left and right corner portions 3 and 5 naturally cause the height differences. However, since amounts of setting in the left and right directions are mutually equal, the heights of the inner corner portions 3B and 5A of the left and right set teeth 3 and 5 are equal to each other and the heights of the outer corner portions 3A and 5B of the left and right set teeth 3 and 5 are also equal to each other.

In the above-described configuration, dimensions of a difference in height (projections) H3 in the band width direction between the inner corner portions 3B and 5A of the left and right set teeth 3 and 5 are different from those between the corner portions 7A and 7B of the straight tooth 7 depending on the shape of the ridge lines 9 at the tip portions of the left and right set teeth 3 and 5 and the straight teeth 7, or in other words, depending on the angles of the corner portions of the respective saw teeth 3, 5, and 7. Here, even when the angles of the corner portions are the same, it is still possible to set the dimensions of the projections H3 into arbitrary dimensions by changing the tooth height dimensions of the straight teeth 7 and the left and right set teeth 3 and 5 before setting (dimensions from the reference position to the longest points of the respective saw teeth 3, 5, and 7).

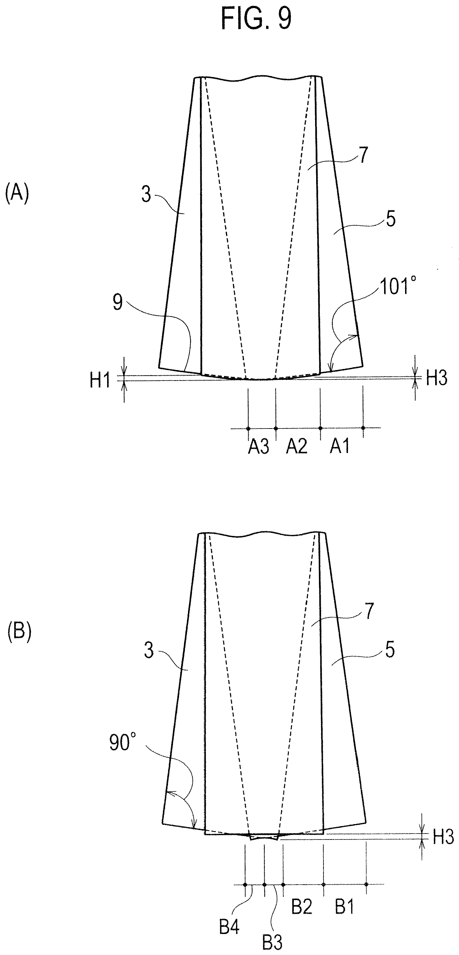

Moreover, when the angle of the corner portion of each of the saw teeth 3, 5, and 7 reaches 101° and greater, as shown in Fig. 9(A), the height difference H1 in the band width direction of the straight tooth 7 becomes equal to 0.06 mm. Meanwhile, the projection H3 (the height difference between the most protruding portion of the ridge line 9 of the straight tooth 7 and the inner corner portions 3B and 5A of the left and right set teeth 3 and 5) is reduced.

Here, a method of measuring the projection H3 is to obtain the value of the projection H3 by measuring the tooth height dimensions of the left and right set teeth 3 and 5 and the straight teeth 7 (the dimensions of the longest portions from the reference position to the saw teeth 3, 5, and 7) for 30 or more pieces of each type of the saw teeth (90 pieces or more in total), and then by obtaining differences among average values of the saw teeth 3, 5, and 7.

As shown in Fig. 9(A), when the angle (101°) of the corner portion of each of the saw teeth 3, 5, and 7 on a band saw blade according to a second embodiment is increased and the projection H3 is reduced (H3= 0.01 mm), the ridge lines 9 of the respective saw teeth 3, 5, and 7 are almost aligned and the ridge lines 9 of the respective saw teeth 3, 5, and 7 are continuous with one another when the left and right set teeth 3 and 5 and the straight teeth 7 are viewed from the running direction of the band saw blade 1 (the direction opposite to the arrow A in Fig. 6). Here, in light of a relationship of overlap among the right set teeth 5, the left set teeth 3, and the straight teeth 7, for example, a portion A1 shown in Fig. 9(A) is a single portion not overlapping other saw teeth while a portion A2 is an overlapping portion which overlaps the straight tooth 7. Moreover, a portion A3 is an overlapping portion which overlaps the straight tooth 7 and the left set tooth 3.

In order to compare the above-described configuration with the case of a typical conventional band saw blade, Fig. 9(B) illustrates the case of a structure in which the angle of the corner portion of each of the left and right set teeth 3 and 5 and the straight teeth 7 is set to 90° and the setting amounts of the left and right set teeth 3 and 5 are equal to those of the left and right set teeth 3, 5, and 7 in Fig. 9(A). In light of a relationship of overlap among the right set teeth 5, the left set teeth 3, and the straight teeth 7 in Fig. 9(B), a portion B1 is a single portion not overlapping other saw teeth while a portion B2 is an overlapping portion which overlaps the straight tooth 7. A portion B3 is an overlapping portion which overlaps the left set tooth 3 and the straight tooth 7 and is the portion where the inner corner portion of the left set tooth 3 protrudes most. Moreover, a portion B4 is an overlapping portion which overlaps the left set tooth 3 and the straight tooth 7 and is the portion where the inner corner portion of the right set tooth 5 protrudes most.

In the relationship of overlap among the left and right set teeth 3 and 5 and the straight teeth 7, only the right set teeth 5 perform cutting at the single portions A1 and B1 while the right set teeth 5 and the straight teeth 7 perform cutting at the overlapping portions A2 and B2. In this case, since the ridge lines 9 overlap one another according to the configuration shown in Fig. 9(A), the straight teeth 7 and the right set teeth 5 perform cutting of the overlapping portion A2 almost as equally as each other, whereby the amounts of abrasion of the portions of the straight teeth 7 and the right set teeth 5 corresponding to the overlapping portion A2 become almost equal to each other. Note that the same applies to the overlapping portion A3. Moreover, the same applies to the left set teeth 3 and the straight teeth 7.

However, regarding the overlapping portion B2 according to the configuration shown in Fig. 9(B), the straight teeth 7 slightly protrude downward from the right set teeth 5. Therefore, the straight teeth 7 mainly perform cutting at the overlapping portion B2 while the right set teeth 5 perform cutting subordinately. As a consequence, there occurs a difference between the cutting amount of the straight teeth 7 and the cutting amount of the right set teeth 5 on the overlapping portion B2, whereby the amount of abrasion at the portions of the straight teeth 7 corresponding to the overlapping portion B2 is different from the amount of abrasion at the relevant portions of the right set teeth 5 and the state of abrasion becomes uneven. Note that the same applies to the overlapping portions B3 and B4. Moreover, the same applies to the left set teeth 3 and the straight teeth 7.

As understood from the above description, according to the conventional band saw blade in which the angles of the corner portions of the left and right set teeth 3 and 5 and the straight teeth 7 are set to 90°, the corner portions (the angled portions) of the respective saw teeth 3, 5, and 7 protrude relatively largely from the straight ridge lines of the respective saw teeth 3, 5, and 7. Hence the amounts of the abrasion among the saw teeth 3, 5, and 7 at the overlapping portions of the saw teeth 3, 5, and 7 become uneven. Accordingly, along the progress of abrasion of the respective saw teeth 3, 5, and 7, the saw teeth are unevenly worn away, whereby balance in the right and left direction is deteriorated and cutting deviation will occur more often as a consequence.

On the other hand, according to the configuration shown in Fig. 9(A), the ridge lines 9 at the tip portions of the left and right set teeth 3 and 5 and the straight teeth 7 are formed into the curved lines, and the ridge lines 9 of the respective saw teeth 3, 5, and 7 are continuous with one another when viewed from the running direction of the band saw blade. Thus, cutting on the overlapping portions of the saw teeth 3, 5, and 7 is performed evenly, and the amounts of the abrasion of the portions corresponding the overlapping portions of the saw teeth 3, 5, and 7 become even. Therefore, even if the abrasion of the tooth tips of the respective saw teeth 3, 5, and 7 make progress, the continuous state of the ridge lines 9 of the respective saw teeth 3, 5, and 7 is maintained. Hence it is possible to suppress occurrence of cutting deviation and to perform cutting stably.

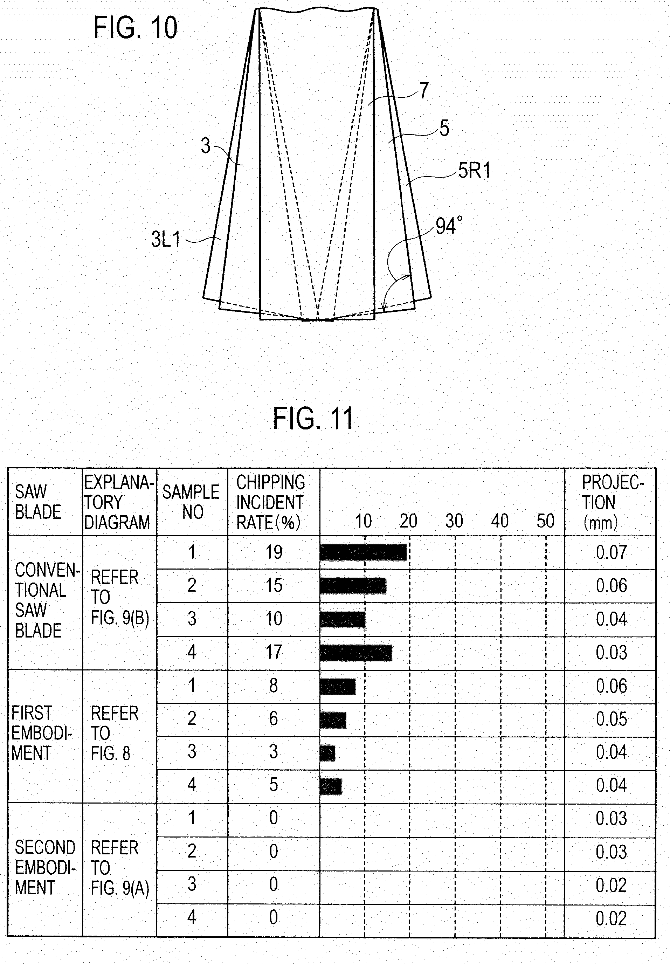

Fig. 10 shows a band saw blade according to a third embodiment. This third embodiment is configured to add left and right set teeth 3L1 and 5R1 having small tooth height dimensions and large setting amounts to the band saw blade according to the above-described first embodiment. This embodiment can also achieve a similar effect to that of the above-described embodiments.

In order to confirm performances of the band saw blades, four band saw blades having the conventional configuration shown in Fig. 9B, four band saw blades according to the first embodiment shown in Fig. 8 and four band saw blades according to the second embodiment shown in Fig. 9(A) are manufactured under the same condition. The number of teeth for one group, the number of the straight teeth, and the number of the left and right set teeth in each of the band saw blades are set equal, and the setting amounts in the left and right directions and the dimensions of the tooth heights are set equal. Then, cutting experiments of a work are carried out under the same conditions. Experimental conditions are as follows.

### Experimental Conditions

Band Saw Machine: HA400 manufactured by Amada Co., Ltd.
Material To Be Cut: H-beam steel 194W × 150H × 6/9
Saw Blade Dimensions: Band Width 41 mm, Band Thickness 1.3 mm, Saw Blade Length 4570 mm, 2/3 P
Rotating Speed of Saw Blade: 50 m/min, Cutting Time 1 min. 30 sec. After performing five cuts in accordance with the above-mentioned conditions, all the tooth tips are observed to count the number of incidents of chipping.

Here, in the band saw blade according to the first embodiment, both of the height difference H1 in the band width direction and the height difference H2 in the band length direction are set to 0.2 mm, and both of the values H1 and H2 in the band saw blade according to the second embodiment are set to 0.06 mm.

The cutting time using the same band saw machine and the same material to be cut as those cited in the experimental condition, and using the band saw blade (the conventional band saw blade shown in Fig. 9(B)) is generally in a range of three to eight minutes (which is the cutting time twice to five times as long as the time under the experimental conditions) and it is possible to perform approximately 1000 cuts. However, these experiments are carried out as experiments for marginal performances under strict cutting conditions by setting short cutting time in order to clarify the difference in performance among the band saw blades in a short period of time. Experimental results are shown in Fig. 11.

As apparent from Fig. 11, the conventional band saw blades show incident rates of chipping equal to or above 10% in all of the band saw blades marked as samples 1 to 4. Moreover, the sample 4 of the conventional band saw blades causes chipping despite the small projection (H3= 0.03 mm). That is, one of the reasons for the results by the conventional band saw blade seems to be low rigidity of the corner portions as the angle of the corner portions (angle portions) of the left and right set teeth 3 and 5 and the straight teeth 7 is equal to 90°.

In the case of the band saw blade shown in the first embodiment, all samples 1 to 4 cause chipping but incidence rates are equal to or below 8%. Accordingly, it is apparent that the incidence rates of chipping are lower than the case of the conventional band saw blade. Moreover, according to the band saw blade of the first embodiment, the incidence rates of chipping tend to become lower as the projection (H3= 0.06 to 0.04 mm) becomes smaller.

Specifically, in the band saw blade according to the first embodiment, the ridge line 9 at each tooth tip of the left and right set teeth 3 and 5 and the straight teeth 7 is formed into the convex curved line so as to protrude most at the central portion in the thickness direction of each saw tooth, and the angle of the corner portion of each of the saw teeth 3, 5, and 7 is thereby set to 94°. Therefore, rigidity is increased as compared to the case of setting the corner portion of each of the saw teeth 3, 5, and 7 equal to 90° and the band saw blade of the first embodiment causes less chipping. Moreover, reduction in the size of the projection H3 is equivalent to reduction in the amount of projection of the inner corner portions 3B and 5A of the left and right set teeth 3 and 5 from the ridge line 9 at the tip end of the straight tooth 7. It is thus possible to reduce an amount of incision with the corner portions 3B and 5A to a small level at a start of cutting a work, and thereby to suppress occurrence of chipping.

The band saw blade of the second embodiment achieves the incident rate of chipping equal to 0%. Hence this band saw blade is apparently better than the conventional band saw blades and the band saw blade according to the first embodiment. In the band saw blade according to the second embodiment, the angle of the corner portion of each of the left and right set teeth 3 and 5 and the straight teeth 7 is equal to 101°. Therefore, rigidity of the corner portion is further increased because the angle of the corner portion is further increased. In addition, the projection (H3= 0.03 to 0.02 mm) is also reduced. As a consequence, this band saw blade achieves the incidence rate of chipping equal to 0%.

As apparent from the above-described experiments, in order to reduce the incidence rate of chipping on the saw teeth on the band saw blade, it is desirable to set the angle of the corner portion on each of the saw teeth equal to or above 90°, and to set the projection H3 equal to or below 0.03 mm (including 0.00 mm).

As understood from the experimental results, it is confirmed that the band saw blade according to the second embodiment is excellent in suppressing occurrence of chipping. Therefore, experiments on abrasion of the tooth tips are subsequently carried out by use of the conventional band saw blade and the band saw blade according to the second embodiment. Experimental conditions are as follows.

### Experimental Conditions

Band Saw Machine: HA400 manufactured by Amada Co., Ltd.
Material To Be Cut: JIS Standard SKD61 ϕ252
Saw Blade Dimensions: Band Width 41 mm, Band Thickness 1.3 mm, Saw Blade Length 4570 mm, Saw Blade Pitch 2/3 P
Rotating Speed of Saw Blade: 40 m/min, Cutting Time 12 min. 30 sec. Abrasion of the tooth tips after performing 20 cuts and transition of cutting deviation dimensions until completing 20 cuts in accordance with the above-mentioned experimental conditions are compared.

Here, in the band saw blade according to the second embodiment, both of the height difference H1 in the band width direction and the height difference H2 in the band length direction are set to 0.6 mm.

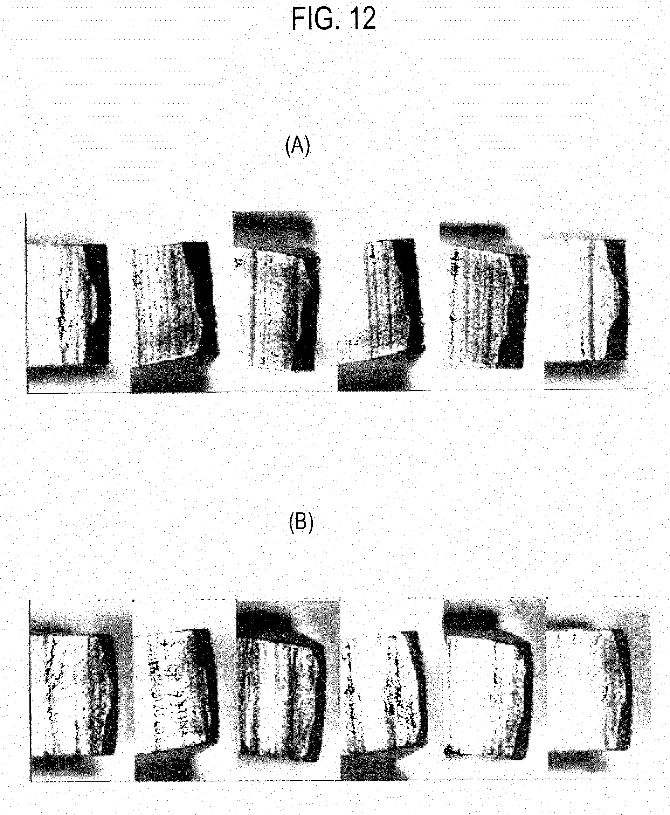

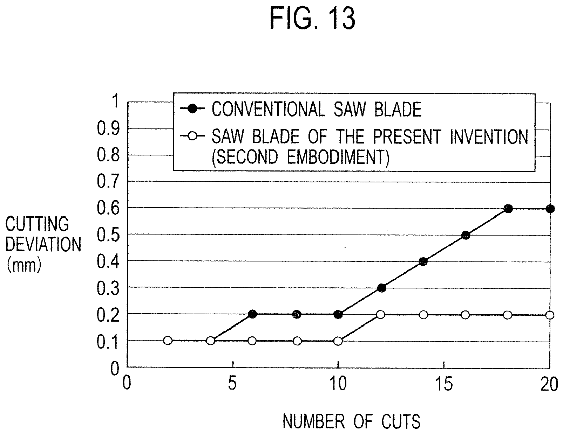

Experimental results of abrasion of the saw teeth are shown in photographs in Figs. 12(A) and 12(B). Fig. 12(A) shows a state of abrasion on the tips of the saw teeth of the conventional saw blade after performing 20 cuts and Fig. 12(B) shows a state of abrasion on the tips of the saw teeth of the saw blade based on the present invention after performing 20 cuts. Moreover, the transition of cutting deviation until completing 20 cuts is shown on a graph in Fig. 13. Here, values of the cutting deviation are indicated as maximum dimensional differences of irregularities on cut surfaces after completion of cutting.

As apparent from Fig. 12, abrasion of the saw teeth on the conventional band saw blade results in distinctive occurrence of both of portions having large amounts of abrasion and portions having small amounts of abrasion. This is attributed to variations in shape among the overlapping portions of the saw teeth 3, 5, and 7 in the band saw blade (see Fig. 9(B) and the corresponding part in this description), which lead to variations in the amount of abrasion. In contrast to the above-described conventional band saw blade, the saw teeth on the band saw blade according to the second embodiment have almost the same amount of abrasion in a uniform shape.

In addition, the conventional band saw blade shows a gradual increase in the size of cutting deviation after 10 cuts whereas the band saw blade according to the second embodiment show constant cutting deviation without any increase.

The experiments are conducted as the experiments in the case where both of the height difference H1 in the band width direction and the height difference H2 in the band length direction of the saw teeth 3, 5, and 7 on the band saw blade according to the second embodiment are set equal to 0.06 mm. Here, if both of the height differences H1 and H2 become equal to or below 0.02 mm, the ridge lines 9 of the respective saw teeth 3, 5, and 7 come close to a straight line. In the meantime, the angle of the corner portion of each of the saw teeth 3, 5, and 7 also comes close to 90°. Therefore, it is preferable to set each of the height differences H1 and H2 equal to or above 0.02 mm. Moreover, an upper limit of both of the height differences H1 and H2 is preferably set equal to or below 0.1 mm.

Specifically, when a brand-new band saw blade is used, trial cutting is previously performed under mild cutting conditions in order to suppress chipping. When the amounts of abrasion at the corner portions of each of the saw teeth are measured after performing this trial cutting, the maximum amounts of abrasion corresponding to the height difference in the band width direction and to the height difference in the band length direction are equal to 0.1 mm. Therefore, the height difference H1 in the band width direction and the height difference H2 in the band length direction are allowed to be 0.1 mm at the maximum.

Besides the band saw blades, the saw blades also include circular saw blades. The circular saw blades are different from the band saw blades in shape and thickness (the thickness of a band saw blade is generally in a range of 0.9 mm to 1.6 mm whereas the thickness of a circular saw blade depends on the diameter thereof but is usually in a range of 2.0 mm to 12.0 mm), and accordingly the circular saw blade has higher rigidity than the band saw blade. Therefore, even if the abrasion of the tooth tips on the saw teeth makes progress, the circular saw blades are more unlikely to cause cutting deviation than the band saw blades. Even if the above-described structure of the saw teeth of the band saw blade can be easily applied to the circular saw blade without any change, it is difficult to apply the structure of the saw teeth on the circular saw blade to the structure of the band saw blade without any change.

The present invention is not limited only to the description in conjunction with the aforementioned embodiments of the invention and various other aspects are possible by applying appropriate modifications falling within the scope of the claims.

## Claims

1. A band saw blade comprising:
left and right set teeth (3, 5) which are set in right and left directions with respect to a running direction (A) of the band saw blade (1);
wherein a ridge line (9) at a tip of each saw tooth (3, 5) of the set teeth (3,5) is formed into a convex curved line protruding most at a central portion in a thickness direction of the saw tooth (3, 5); **characterized in that**
the band saw blade (1) further comprises a straight tooth (7) which is not set,
wherein a ridge line (9) at a tip of each saw tooth (7) of the straight tooth (7) is also formed into a convex curved line protruding most at a central portion in a thickness direction of the saw tooth (7).

2. The band saw blade according to claim 1, wherein
the ridge lines (9) of the left and right set teeth (3, 5) and of the straight tooth (7) are continuous with one another when viewed from the running direction (A) of the band saw blade (1).

3. The band saw blade according to claim 1, wherein
a height difference (H2) between the ridge lines (9) of the saw teeth (3, 5, 7) is in a range of 0.02 mm to 0.1 mm.

4. The band saw blade according to claim 2, wherein
a height difference (H1) between the ridge lines (9) of the saw teeth (3, 5, 7) is in a range of 0.02 mm to 0.1 mm.

5. The band saw blade according to claim 1, wherein
a height difference (H3) between an inner corner portion (3B, 5A) of each of the left and right set teeth (3, 5) and the central portion in the thickness direction of the ridge line (9) of the straight tooth (7) is in a range of 0.00 mm to 0.03 mm.

6. The band saw blade according to claim 2, wherein
a height difference (H3) between an inner corner portion (3B, 5A) of each of the left and right set teeth (3, 5) and the central portion in the thickness direction of the ridge line (9) of the straight tooth (7) is in a range of 0.00 mm to 0.03 mm.

7. The band saw blade according to claim 3, wherein
a height difference (H3) between an inner corner portion (3B, 5A) of each of the left and right set teeth (3, 5) and the central portion in the thickness direction of the ridge line (9) of the straight tooth (7) is in a range of 0.00 mm to 0.03 mm.

8. The band saw blade according to claim 4, wherein
a height difference (H3) between an inner corner portion (3B, 5A) of each of the left and right set teeth (3, 5) and the central portion in the thickness direction of the ridge line (9) of the straight tooth (7) is in a range of 0.00 mm to 0.03 mm.

## Patentansprüche

1. Bandsägeblatt, das umfasst:
linke und rechte geschränkte Zähne (3, 5), die in Bezug auf eine Laufrichtung (A) des Bandsägeblatts (1) nach rechts und nach links geschränkt sind;
wobei eine Spitzenlinie (9) an einem vorderen Ende jedes Sägezahns (3, 5) der geschränkten Zähne (3, 5) als eine konvex gekrümmte Linie ausgebildet ist, die in einem Mittelabschnitt in einer Dickenrichtung des Sägezahns (3, 5) am weitesten vorsteht,
**dadurch gekennzeichnet, dass**
das Bandsägeblatt (1) des Weiteren einen geraden Zahn (7) umfasst, der nicht geschränkt ist,
wobei eine Spitzenlinie (9) an einem vorderen Ende jedes Sägezahns (7) des geraden Zahns (7) als eine konvex gekrümmte Linie ausgebildet ist, die in einem Mittelabschnitt in einer Dickenrichtung des Sägezahns (7) am weitesten vorsteht.

2. Bandsägeblatt nach Anspruch 1, wobei
die Spitzenlinien (9) der linken und rechten geschränkten Zähne (3, 5) sowie des geraden Zahns (7), in der Laufrichtung (A) des Bandsägeblatts (1) gesehen, sich aneinander anschließen.

3. Bandsägeblatt nach Anspruch 1, wobei
eine Höhendifferenz (H2) zwischen den Spitzenlinien (9) der Sägezähne (3, 5, 7) in einem Bereich von 0,02 mm bis 0,1 mm liegt.

4. Bandsägeblatt nach Anspruch 2, wobei
eine Höhendifferenz (H1) zwischen den Spitzenlinien (9) der Sägezähne (3, 5, 7) in einem Bereich von 0,02 mm bis 0,1 mm liegt.

5. Bandsägeblatt nach Anspruch 1, wobei
eine Höhendifferenz (H3) zwischen einem inneren Eckenabschnitt (3B, 5A) der linken und rechten geschränkten Zähne (3, 5) und dem Mittelabschnitt in der Dickenrichtung der Spitzenlinie (9) des geraden Zahns (7) in einem Bereich von 0,00 mm bis 0,03 mm liegt.

6. Bandsägeblatt nach Anspruch 2, wobei
eine Höhendifferenz (H3) zwischen einem inneren Eckenabschnitt (3B, 5A) der linken und rechten geschränkten Zähne (3, 5) und dem Mittelabschnitt in der Dickenrichtung der Spitzenlinie (9) des geraden Zahns (7) in einem Bereich von 0,00 mm bis 0,03 mm liegt.

7. Bandsägeblatt nach Anspruch 3, wobei
eine Höhendifferenz (H3) zwischen einem inneren Eckenabschnitt (3B, 5A) der linken und rechten geschränkten Zähne (3, 5) und dem Mittelabschnitt in der Dickenrichtung der Spitzenlinie (9) des geraden Zahns (7) in einem Bereich von 0,00 mm bis 0,03 mm liegt.

8. Bandsägeblatt nach Anspruch 4, wobei
eine Höhendifferenz (H3) zwischen einem inneren Eckenabschnitt (3B, 5A) der linken und rechten geschränkten Zähne (3, 5) und dem Mittelabschnitt in der Dickenrichtung der Spitzenlinie (9) des geraden Zahns (7) in einem Bereich von 0,00 mm bis 0,03 mm liegt.

## Revendications

1. Lame de scie à ruban comprenant :
des dents avoyées gauche et droite (3, 5) qui sont positionnées dans des directions gauche et droite par rapport à une direction de défilement (A) de la lame de scie à ruban (1) ;
dans laquelle une ligne de crête (9) à une extrémité de chaque dent de scie (3, 5) des dents avoyées (3, 5) est formée dans une ligne incurvée convexe dépassant le plus sur une partie centrale d'une direction d'épaisseur de la dent de scie (3, 5) ; **caractérisé en ce que**
la lame de scie à ruban (1) comprend en outre une dent droite (7) qui n'est pas avoyée,
dans laquelle une ligne de crête (9) à une extrémité de chaque dent de scie (7) de la dent droite (7) est également formée dans une ligne incurvée convexe dépassant le plus sur une partie centrale d'une direction d'épaisseur de la dent de scie (7).

2. La lame de scie à ruban selon la revendication 1, dans laquelle
les lignes de crête (9) des dents avoyées gauche et droite (3, 5) et de la dent droite (7) sont continues les unes à la suite des autres lorsque visualisées depuis la direction de défilement (A) de la lame de scie à ruban (1).

3. La lame de scie à ruban selon la revendication 1, dans laquelle
une différence de hauteur (H2) entre les lignes de crête (9) des dents de scie (3, 5, 7) s'inscrit dans une plage de 0,02 mm à 0,1 mm.

4. La lame de scie à ruban selon la revendication 2, dans laquelle
une différence de hauteur (H1) entre les lignes de crête (9) des dents de scie (3, 5, 7) s'inscrit dans une plage de 0,02 mm à 0,1 mm.

5. La lame de scie à ruban selon la revendication 1, dans laquelle
une différence de hauteur (H3) entre une partie de coin intérieure (3B, 5A) de chacune des dents avoyées gauche et droite (3, 5) et la partie centrale dans la direction d'épaisseur de la ligne de crête (9) de la dent droite (7) s'inscrit dans une plage de 0,00 mm à 0,03 mm.

6. La lame de scie à ruban selon la revendication 2, dans laquelle
une différence de hauteur (H3) entre une partie de coin intérieure (3B, 5A) de chacune des dents avoyées gauche et droite (3, 5) et la partie centrale dans la direction d'épaisseur de la ligne de crête (9) de la dent droite (7) s'inscrit dans une plage de 0,00 mm à 0,03 mm.

7. La lame de scie à ruban selon la revendication 3, dans laquelle
une différence de hauteur (H3) entre une partie de coin intérieure (3B, 5A) de chacune des dents avoyées gauche et droite (3, 5) et la partie centrale dans la direction d'épaisseur de la ligne de crête (9) de la dent droite (7) s'inscrit dans une plage de 0,00 mm à 0,03 mm.

8. La lame de scie à ruban selon la revendication 4, dans laquelle
une différence de hauteur (H3) entre une partie de coin intérieure (3B, 5A) de chacune des dents avoyées gauche et droite (3, 5) et la partie centrale dans la direction d'épaisseur de la ligne de crête (9) de la dent droite (7) s'inscrit dans une plage de 0,00 mm à 0,03 mm.
